(19) **Europäisches Patentamt / European Patent Office / Office européen des brevets**

(11) **EP 1 981 028 A1**

(12) **EUROPEAN PATENT APPLICATION**
published in accordance with Art. 158(3) EPC

(43) Date of publication:
**15.10.2008 Bulletin 2008/42**

(21) Application number: **07706939.1**

(22) Date of filing: **11.01.2007**

(51) Int Cl.:
*G11B 7/254* (2006.01)    *G11B 7/24* (2006.01)
*G11B 7/243* (2006.01)    *G11B 7/257* (2006.01)

(86) International application number:
**PCT/JP2007/050632**

(87) International publication number:
**WO 2007/086293 (02.08.2007 Gazette 2007/31)**

(84) Designated Contracting States:
**DE FR GB**

(30) Priority: **30.01.2006 JP 2006021502**

(71) Applicant: **Sony Corporation**
**Minato-ku**
**Tokyo (JP)**

(72) Inventors:
• **SABI, Yuichi c/o SONY CORPORATION**
**Tokyo 108-0075 (JP)**

• **IKEDA, Etsuro c/o SONY CORPORATION**
**Tokyo 108-0075 (JP)**

(74) Representative: **Müller, Frithjof E.**
**Müller Hoffmann & Partner**
**Patentanwälte**
**Innere Wiener Strasse 17**
**81667 München (DE)**

(54) **INFORMATION RECORDING MEDIUM AND METHOD FOR FABRICATING SAME**

(57)    To obtain high durability even when a recording material which causes big cubical expansion is used for a recording film of an information recording medium. An information recording medium 10 comprises a substrate, a recording film provided on the substrate, and a dielectric film provided on the substrate. The recording film is made of recording material configured to cause cubical expansion by light energy irradiation. The dielectric film is made of $ZrO_2$ and $Cr_2O_3$. This prevents the generation of cracks in the dielectric film 4 and the immersion of moisture to the recording film 6 even when the recording material causes cubical expansion due to light energy irradiation.

## Fig. 1

**Description**

Technical field

The present invention relates to an information recording medium and its manufacturing method. More specifically, it relates to an information recording medium capable of recording information signals by irradiating the light.

Background Art

Write-once type optical recording media requires characteristics such as non-erasable (tamper-proof), highly durable and inexpensive but not continuous rewritable characteristics. In general, a material in which at least either one of refractive index or absorption coefficient is changed by heat is used for a recording film of write-once type optical recording media. Furthermore, in some cases, the recording film undergoes cubical expansion or the film thickness substantially changes due to the deformation of the substrate after recording, which may affect reproduction signals. It is widely known that such volume change and substrate deformation outstandingly are generated in the case that organic dye is used for recording material, however, this kind of volume change is sometimes observed even in the case that inorganic material is used whatever the change is minor or major.

In the view point of the durability of the recording film, a metal film or a dielectric film is provided in both or one boundary of the recording film. For example, $ZnS$-$SiO_2$ type dielectric film widely employed as a protective film of phase change material is an ideal material which implements fine recording characteristic as well as protective film function. This material has low heat conductivity, and can supersensitise recording sensitivity. In addition, the material has good adhesiveness with the recording film, so that favorable rewriting characteristic is obtained in the case of phase change material.

Moreover, since the material has high refractive index, optical characteristic can be easily optimized, enabling the proper configuration of reflectivity and modulation level.

In addition, since $ZnS$-$SiO_2$ has less internal stress, the occurrence of crack or breakage is less. As described above, there are many cases that the film thickness widely changes before and after recording in write-once type optical recording media, and when a crack is caused in the protective film after recording to form a gap, moisture and so on go inside from there and may cause a serious problem against durability. $ZnS$-$SiO_2$ is a material which hardly causes such a problem.

As mentioned above, $ZnS$-$SiO_2$ is a very excellent dielectric film as write-once type optical recording media. However, there is a disadvantage that S (sulfur) constituent tends to isolate, diffuse to adjacent layers and react, which easily cause degradation. Especially, like BD-R (Blu-ray Disc-Recordable (registered trademark)), when a light transmission layer is provided on a recording film, and Pressure Sensitive Adhesive (PSA) is used for the light transmission layer, if $ZnS$-$SiO_2$ is adjacent to PSA, PSA degrades. Specifically, the property change of PSA in wide range causes huge aberration in light spot, degrading reproduction signals.

Consequentially, to provide a further dielectric film between $ZnS$-$SiO_2$ and PSA has been proposed. For the dielectric film, the utilization of $Si_3N_4$ widely used as a protective film prevents the reaction of S and PSA, so that the above-mentioned aberration problem can be solved. (For example, refer to Japanese Patent Published Unexamined Application No.2003-59106).

However, when the dielectric film is further provided as mentioned above, another problem is caused in the view of durability. That is, the recording film expands after recoding information signals, and a crack is caused in $Si_3N_4$ film, moreover, a crack is also caused in $ZnS$-$SiO_2$ film adjacent to $Si_3N_4$ film. And then, due to this crack, moisture goes in the recording film, which generates a serious problem in durability.

Therefore, an object of the present invention is to provide an information recording medium which can obtain high durability even when a material which causes big cubical expansion is used for a recording film, and a method for manufacturing the information recording medium.

Disclosure of the Invention

To solve the above-mentioned problems, an information recording medium in a first aspect of the invention comprises a substrate, a recording film provided on the substrate, and a dielectric film provided on the substrate, wherein the recording film is made of recording material configured to cause cubical expansion by light energy irradiation, and the dielectric film is made of $ZrO_2$ and $Cr_2O_3$.

A method for manufacturing an information recording medium which has a substrate, a recording film provided on the substrate, and a dielectric film provided on the substrate in a second aspect of the invention comprises a step of forming the above-mentioned recording film from a recording material configured to cause cubical expansion by light energy irradiation, and a step of forming the above-mentioned dielectric film made of $ZrO_2$ and $Cr_2O_3$.

In the first and the second aspect of the invention, it is preferable that the dielectric film contains 40 atom% or more and 90 atom% or less $Cr_2O_3$. And it is preferable that the dielectric film further include $SiO_2$. Furthermore, it is preferable that the dielectric film have a film thickness of 2 nm or more and 20 nm or less. Moreover, it is preferable that a dielectric film made of ZnS-$SiO_2$ is provided between the recording film and the dielectric film made of $SiO_2$.

In the first and the second aspect of the invention, it is preferable that the recording film includes an oxide film made of Ge oxide. In this regards, it is preferable that the recording film includes an adjacency film which adjacent to the oxide film and the adjacency film is made of Ti or TiSi.

In the first and the second aspect of the invention, since the dielectric film is made of ZrO2 and $Cr_2O_3$, even if the recording film causes cubical expansion due to light energy irradiation, the generation of a crack in the dielectric film can be prevented. Accordingly, the break-in of moisture into the recording film can be reduced.

As explained above, according to the present invention, even when a material which causes big cubical expansion is used for a recording film, high durability can be obtained.

Brief Description of the Drawings

FIG. 1 is a schematic cross-sectional view which shows one configuration example of a write-once type optical recording medium in accordance with a first embodiment of the present invention.

FIG. 2 is a schematic cross-sectional view which shows one configuration example of a write-once type optical recording medium in accordance with a second embodiment of the present invention.

FIG. 3 is a schematic cross-sectional view which shows one configuration example of a write-once type optical recording medium in accordance with a third embodiment of the present invention.

FIG. 4 is a chart which shows an error rate of a write-once type optical recording medium of a comparative example 1 before and after an accelerated test.

FIG. 5 is a chart which shows an error rate of a write-once type optical recording medium of an embodiment 1 before and after an accelerated test.

Best Modes for Carrying out the Invention

Described below is an explanation of a preferred embodiment of the present invention with reference to drawings. In all drawings of the following embodiments, identical reference numerals are given to identical or corresponding components.

(1) First embodiment

(1-1) Configuration of a write-once type optical recording medium

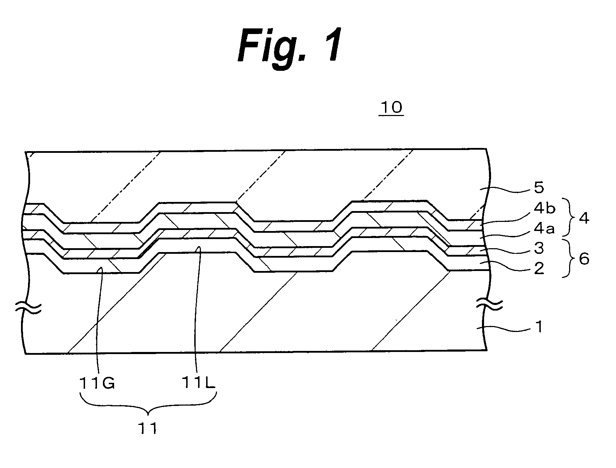

FIG. 1 is a schematic cross-sectional view which shows one configuration example of a write-once type optical recording medium in accordance with a first embodiment of the present invention. The write-once type optical recording medium 10 has a configuration that a substrate 1 is laminated by an inorganic recording film 6, a dielectric film 4, and a light transmission layer 5 in order. In this embodiment, a case in which an inorganic recording film 6 having an oxide film made of germanium (Ge) oxide is used for a recording film causing cubical expansion by laser beam irradiation.

In the write-once type optical recording medium 10 of the first embodiment, a laser beam irradiation to the inorganic recording film 6 from the light transmission layer 5 side carries out the record or the reproduction of information signals. For example, by concentrating a laser beam having a wavelength of 400 nm or more and 410 nm or less through an objective lens having a numerical aperture of 0.84 or more and 0.86 or less to irradiate to the inorganic recording film 6 from the light transmission layer 5 side, the record or the reproduction of information signals is carried out. For such the write-once type optical recording medium 10 includes for example, BD-R (Blu-ray Disc-Recordable).

The substrate 1, the inorganic recording film 6, the dielectric film 4, and the light transmission layer 5 configuring the write-once type optical recording medium 10 are described below sequentially.

(Substrate)

The substrate 1 has an annular shape in which an opening (hereinafter referred to as center hall) is formed at the center thereof. A main surface of the substrate 1 forms a concavo-convex surface 11, and the inorganic recording film 6 is formed on the concavo-convex surface 11. Herein below, the recess of the concavo-convex surface 11 is referred to as in-groove 11G, the protrusion of the concavo-convex surface 11 is referred to as on-groove 11L.

The shape of the in-groove 11G and the on-groove 11L includes various shapes such as spiral and concentric circle. Or, the in-groove 11G and/or the on-groove 11L is wobbled to add address information. It is preferable that the amplitude of the wobble is within the range of 9 nm or more and 13 nm or less. The track pitch is preferably within the range of 0.29 μm or more and 0.35 μm or less, and the depth of groove is preferably within the range of 18 nm or more and 21.5 nm or less.

Furthermore, it is preferable to satisfy a relation:

$$-0.01 < 2(R_{ON} - R_{IN})/(R_{ON} + R_{IN})$$

wherein the amount of the reflected light of Blu-ray evaluation equipment is $R_{ON}$ when the on-groove 11L is being tracked, the amount of the reflected light of Blu-ray evaluation equipment is $R_{IN}$ when the in-groove 11G is being tracked in-groove 11G.

The diameter of the substrate 1 is selected to be, for example, 120 mm. The thickness of the substrate 1 is selected in consideration of rigidity, preferably from 0.3 mm or more and 1.3 mm or less, more preferably, is selected from 0.6 mm or more and 1.3 mm or less, for example, 1.1 mm. In addition, the diameter of the center hall is selected to be, for example 15 mm.

For the material of the substrate 1, plastic material such as polycarbonate resin, polyolefin resin or acrylic resin, or glass, etc. can be used. When taking account of cost, it is preferable to use plastic material for the material of the substrate 1.

(Inorganic recording film)

The inorganic recording film 6 includes a metal film 2 and an oxide film 3 laminating over the concavo-convex surface 11 on the substrate 1 in order. The metal film 2 is an adjacency film which is provided next to the oxide film 3, and is substantially made of titanium (Ti). Inclusion of Ti as a main material basically accomplishes excellent recording characteristic.

Furthermore, in order to improve optical characteristic, durability recording sensitivity, etc., additive may be added to the metal film 2. For such additive, one or more types selected from a group including for example, aluminum (A1), silver(Ag), copper (Cu), palladium (Pd), germanium (Ge), silicon (Si), tin (Sn), nickel (Ni), iron (Fe), magnesium (Mg), vanadium (V), carbon (C), calcium(Ca), boron (B), chromium (Cr), niobium (Nb), zirconium (Zr), sulfur (S), selenium (Se), manganese (Mn), gallium (Ga), molybdenum (Mo), tungsten (W), terbium (Tb), dysprosium (Dy), gadolinium (Gd), neodymium (Nd), zinc (Zn), tantalum (Ta) and strontium (Sr) can be used.

For example, when Si is added to the metal film 2, it is preferable that the composition ratio of Si is within the range of 8 atom% or more and 32 atom% or less. This is because if it is less than 8 atom%, an excellent jitter value cannot be obtained, and if it is more than 32 atom%, an excellent recording sensitivity cannot be obtained.

In addition, the material configuring the metal film 2 may be oxidized, and such oxide includes, for example, TiSiO. Such oxidization can improve jitter.

Moreover, the material configuring the metal film 2 may be nitride. Such nitride includes, for example, TiSi-N. Such nitride nitriding can extend power margin.

It is preferable that the composition of the nitrogen of the metal film 2 is within the range of 1 atom% or more and 20 atom% or less. This is because if it is less than 1 atom%, the effect for improving power margin is reduced, and if it is more than 20 atom%, jitter degrades.

The oxide film 3 is substantially made of GeO which is an oxide of germanium (Ge). The absorption coefficient k of the oxide film 3 is preferably within the range of 0.15 or more and 0.90 or less, more preferably 0.20 or more and 0.70 or less, and further preferably 0.25 or more and 0.60 or less. Also, film thickness of the oxide film 3 is preferably within the range of 10 nm or more and 35 nm or less. By satisfying the range of 0.15 or more and 0.90 or less, for example, good modulation level and carrier to noise ratio (hereinafter, refer to as C/N ratio) can be obtained. By satisfying the range of 0.20 or more and 0.70 or less, for example better modulation level and C/N ratio can be obtained. By satisfying the range of 0.25 or more and 0.60 or less, for example much better modulation level and C/N ratio can be obtained.

The absorption coefficient in the description is in the case of a wavelength of 410 nm. In addition, the measured values were measured by an ellipsometer (Rudolph Research Analytical, product name: Auto EL-462P17).

Moreover, additive may be added to the oxide film 3, and for such additive, one or more types selected from a grope including, for example, tellurium (Te), chromium (Cr), palladium (Pd), platinum (Pt), copper (Cu), zinc (Zn), gold (Au), silver (Ag), silicon (Si), titanium (Ti), iron (Fe), nickel (Ni), tin (Sn) and antimony (Sb) can be used. The addition of such additive improves durability and/or reactivity (recording sensitivity). In order to improve durability, palladium (Pd), platinum (Pt), silicon (Si), antimony (Sb), and chromium (Cr) are especially preferable.

For example, when antimony (Sb) is added to the oxide film 3, it is preferable that the composition of Sb in the oxide film 3 is within the range of 1 atom% or more and 6 atom% or less. This is because by keeping this range, power margin can be improved.

(Dielectric film)

The dielectric film 4 includes a first dielectric film 4a and a second dielectric film 4b laminated over the inorganic recording film 6 in order. The first dielectric film 4a and the second dielectric film 4b are for optically and mechanically protecting the inorganic recording film 6, in other words, for improving durability, suppressing the deformation of the inorganic recording film 6 on recording, that is, expansion.

The first dielectric film 4a is made of for example, $ZnS\text{-}SiO_2$. The thickness of the first dielectric film 4a is preferably within the range of 10 nm or more and 58 nm or less, more preferably 23 nm or more and 53 nm or less. By making the film thickness to be 10 nm or more, good jitter can be obtained, and by making the film thickness to be 58 nm or less, good reflectivity can be obtained. For example, when the write-once type optical recording medium 10 is BD-R, by making the film thickness to be 10 nm or more, a jitter of 6.5% or less that is the standard of BD-R can be satisfied, and by making the film thickness to be 58 nm or less, a reflectivity of 12% or less that is required in the standard of BD-R can be satisfied. Furthermore, by making the film thickness to be 23 nm or more, better jitter can be gained, and by making the film thickness to be 53 nm or less, much better reflectivity can be gained.

The second dielectric film 4b is made of, for example, $ZrO_2$ and $Cr_2O_3$. It is preferable that the content of $Cr_2O_3$ is within the range of 40 atom% or more and 90 atom% or less. This is because if it is less than 40 atom%, durability is decreased, and if it is more than 90 atom%, durability as well as initial recording characteristic are decreased. It is preferable that the second dielectric film 4b further include $SiO_2$. The inclusion of $SiO_2$ enables the adjustment of recording characteristic such as recording sensitivity, power margin and light strategy. It is preferable that the film thickness of the second dielectric film 4b is within the range of 2 nm or more and 20 nm or less. This is because if it is less than 2 nm, the uniformity of the second dielectric film 4b is decreased, and if it is more than 20 nm, productivity is decreased since the lamination time becomes longer.

(Light transmission layer)

The light transmission layer 5 includes a light transmission sheet (film) having such as an annular shape and an adhesion layer for attaching the light transmission sheet to the substrate 1. The adhesion layer is made of, for example, ultraviolet curing resin or pressure sensitivity adhesive (PSA). The thickness of the light transmission layer 5 is preferably selected from the range of 10 $\mu$m or more and 177 $\mu$m or less, for example to be 100 $\mu$m. The combination of such thin light transmission layer 5 and an objective lens which was processed to have high NA (numerical aperture) such as around 0.85 implements high density recoding.

It is preferable that the light transmission sheet is made of material having low absorption power against laser beam used for record and/or reproduction, specifically material having transmittance of 90% or more. The material of the light transmission sheet includes, for example polycarbonate resin material, polyolefin resin (e.g., ZEONEX (registered trademark)).

Furthermore, the thickness of the light transmission sheet is preferably selected to be 0.3 mm or less, more preferably is selected from 3 $\mu$m or more and 177 $\mu$m or less. In addition, the diameter of the light transmission layer 5 is selected to be, for example, 22.7 mm.

(1-2) A method for manufacturing a write-once type optical recording medium

Next, a method for manufacturing a write-once type optical recording medium acceding to the first embodiment of the present invention is described.

(The forming process of the substrate)

First of all, the substrate 1 configured the concavo-convex surface 11 on the main surface is formed. For the method of forming the substrate 1, for example, the injection molding method, the photo polymerization can be used.

(The forming process of the metal film)

Second, the substrate 1 is delivered to a vacuum chamber in which a target made of such as Ti nitride is provided, and then the inside of the vacuum chamber is vacuumed till a predetermined pressure is gained. After that, while process gas is induced to the vacuum chamber, the target is spattered to form the metal film 2 over the substrate 1.

The following is an example of the film forming condition under this forming process:

Ultimate vacuum: $5.0 \times 10^{-5}$ Pa
Atmosphere: 0.1 to 0.6 Pa
Input power: 1 to 3 kW (DC)
Gas type: Ar gas
Gas flow rate: 10 to 40 sccm

(The forming process of the oxide film)

Third, the substrate 1 is delivered to a vacuum chamber in which a target made of such as Ge oxide is provided, and then the inside of the vacuum chamber is vacuumed till a predetermined pressure is gained. After that, while process gas is induced to the vacuum chamber, the target is spattered to form the oxide film 3 over the substrate 1.

The following is an example of the film forming condition under this forming process:

Ultimate vacuum: $5.0 \times 10^{-5}$ Pa
Atmosphere: 0.1 to 0.6 Pa
Input power: 1 to 3 kW (RF)
Gas type: Ar gas
Ar gas flow rate: 10 to 80 sccm

(The forming process of the first dielectric film)

Fourth, the substrate 1 is delivered to a vacuum chamber in which a target made of such as ZnS-SiO$_2$ is provided, and then the inside of the vacuum chamber is vacuumed till a predetermined pressure is gained. After that, while process gas is induced to the vacuum chamber, the target is spattered to form the first dielectric film 4a over the substrate 1.

The following is an example of the film forming condition under this forming process:

Ultimate vacuum: $5.0 \times 10^{-5}$ Pa
Atmosphere: 0.1 to 0.6 Pa
Input power: 1 to 5kW (RF)
Gas type: Ar gas
Ar gas flow rate: 6 sccm

(The forming process of the second dielectric film)

Fifth, the substrate 1 is delivered to a vacuum chamber in which a target made of such as: SiO$_2$-Cr$_2$O$_3$-ZrO$_2$ is provided, and then the inside of the vacuum chamber is vacuumed till a predetermined pressure is gained. After that, while process gas is induced to the vacuum chamber, the target is spattered to form the second dielectric film 4b over the substrate 1.

The following is an example of the film forming condition under this forming process.

Ultimate vacuum: $5.0 \times 10^{-5}$ Pa
Atmosphere: 0.1 to 0.6 Pa
Input power: 1 to 3 kW (RF)
Gas type: Ar gas
Ar gas flow rate: 15 sccm

(The forming process of the light transmission layer)

Next, the annular light transmission sheet is adhered to the concavo-convex surface 11 side of the substrate 1 with such as pressure sensitivity adhesive (PSA) which has been uniformly applied to the main surface in advance. This forms the light transmission layer 5 so as to cover films laminating over the substrate 1. The above-mentioned processes accomplish the write-once type optical recording medium 10 shown in FIG. 1.

(1-3) Configuration of the target

Described below is a configuration of the target of the present invention. First, the configuration of the target for forming the oxide film 3 is explained. The target for forming the oxide film 3 is made by pressure burning a mixture of Ge powder which is semiconductor powder and Ge oxide powder which is semiconductor oxide powder. The target is, for example disk shape, and the diameter of it is selected to be, for example 200 mm, and the thickness of it is selected to be, for example 6 mm.

It is preferable that the oxygen content after pressure burning is within the range of 45 atom% or more and 60 atom% or less. If it is less than 45 atom%, since absorption coefficient k excesses 0.9, recording characteristic, etc. will be decreased. Moreover, if it is more than 60 atom%, since absorption coefficient becomes less than 0.15, recording characteristic, etc. will be decreased.

Second, the configuration of the target for forming the metal film 2 is explained. The target for forming the metal film 2 is made by pressure burning a mixture of Ti powder which is nitrogen transition metal powder and Ti nitride powder which is nitrogen transition metal nitride powder. The target is, for example disk shape, and its diameter is selected to be, for example 200 mm, and its thickness is selected to be, for example 6 mm.

It is preferable that the nitrogen content after applying pressure and burning is within the range of 1 atom% or more and 20 atom% or less, preferably within the range of 1 atom% or more and 10 atom% or less. By keeping the content within the range of 5 atom% or more and 15 atom% or less, power margin becomes large and the rise of jitter can be suppressed.

(1-4) A method for manufacturing a target

Described below is a method for manufacturing a target according to the first embodiment of the present invention. First, a method for manufacturing a target for forming the oxide film 3 is explained.

(Weighing, mixing)

Predetermined amounts of Ge powder which is semiconductor powder and Ge oxide powder which is semiconductor oxide powder are respectively weighed and then, for example, dry blended. At this point, it is preferable that the mixture ratio of Ge powder and Ge oxide powder is adjusted so that the oxygen content after pressure burning is to be 45 atom% or more and 60 atom% or less.

(Pressure burning)

Next, the mixed powder made according to the above description is put in a carbon mold, and is performed pressure burning with such as a hot pressing device to acquire a burned substance. In this regards, a commonly used type of hot pressing device can be used, and by using this device, the powder is burned for a predetermined time at a certain pressure and a certain temperature of burning in nonoxygen atmosphere.

(Finishing process)

For the burned substance acquired according to the above description, machining process is carried out so as to be a predetermined size disk shape. By the processes described above, the aimed target can be obtained.

Next, a method for manufacturing a target for forming the metal film 2 is explained.

(Weighing, mixing)

Predetermined amounts of Ti powder which is transition metal powder and Ti nitride powder which is transition metal nitride powder are respectively weighed and then, for example, dry blended. At this point, it is preferable that the mixture ratio of Ti powder and Ti nitride powder is adjusted so that the nitrogen content after pressure burning is to be 1 atom% or more and 20 atom% or less, more preferably 5 atom% or more and 15 atom% or less.

(Pressure burning)

Next, the mixed powder made according to the above description is put in a carbon mold, and is performed pressure burning with such as a hot pressing device. In this regards, a commonly used type of hot pressing device can be used, and by using this device, the powder is burned for a predetermined time at a certain pressure and a certain temperature of burning in nonoxygen atmosphere.

(Finishing process)

For the burned substance acquired according to the above description, machining process is carried out so as to be a predetermined size disk shape. By the processes described above, the aimed target can be obtained.

As mentioned above, in the first embodiment, since the lamination of the metal film 2, the oxide film 3, the dielectric film 4, and the light transmission layer 5 over the substrate 1 in order manufactures the write-once type optical recording medium 10, the write-once type optical recording medium 10 having simple film configuration and high recording density can be provided. In other words, the write-once type optical recording medium having small amount of film, which is low price can be provided.

Furthermore, since the inorganic recording film 6 includes the oxide film 3 made of Ge oxide and the metal film 2 next to the oxide film 3, when the laser beam is irradiated to the inorganic recording film 6, due to the photocatalyst effect of the metal film 2, the oxygen of the oxide film 3 is separated so that more oxygen goes to the metal film 2 side. This separates the oxide film 3 in a layer having thick oxygen and a layer having thin oxygen, which changes the optical constant number of the oxide film 3 significantly. Consequently, reproduction signals having high modulation level can be acquired, so that good recording characteristic can be realized.

In addition, by providing the second dielectric film 4b made of $SiO_2$-$Cr_2O_3$-$ZrO_2$ at the place between the light transmission layer 5 having PSA and the first dielectric film 4a made of ZnS-$SiO_2$, the adjacency of ZnS-$SiO_2$ and PSA can be prevented, which suppresses the degrading of PSA. Accordingly, a big aberration is caused in the light spot, so that the degrading of reproduction signals can be suppressed.

Moreover, since $SiO_2$-$Cr_2O_3$-$ZrO_2$ is used for the material for the second dielectric film 4b, in the case that the inorganic recording film 6 causes cubical expansion due to laser beam irradiation, the crack in the second dielectric film 4b and further the crack in the adjacent the first dielectric film 4a can be suppressed. Thus, moisture immersion to the inorganic recording film 6 can be reduced, which improved the durability of the write-once type optical recording medium 10.

In addition, since the dielectric film 4 is configured by two layers including the second dielectric film 4b made of $SiO_2$-$Cr_2O_3$-$ZrO_2$ and ZnS-$SiO_2$ which has faster spatter rate comparing to $SiO_2$ $Cr_2O_3$q$ZrO_2$, tact time can be reduced comparing to the case that the dielectric film 4 is configured by $SiO_2$ $Cr_2O_3$-$ZrO_2$ only. In other words, productivity can be improved.

Furthermore, since the oxide film 3 is formed by spattering the target made of Ge oxide, the oxide film 3 having a certain oxygen density, that is, a certain absorption coefficient can be formed on mass production.

Moreover, since the metal film 2 is formed by spattering the target made of Ti nitride, there is no need to perform a difficult work which is for controlling the small flow rate nitrogen gas to be constant. Thus, the metal film 2 can be constantly formed on mass production.

(2) Second embodiment

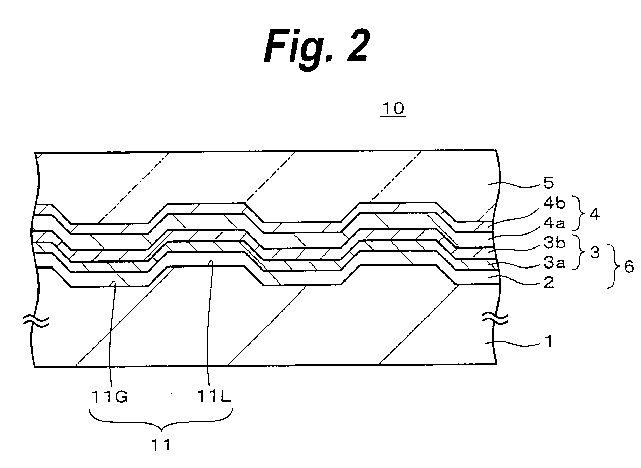

FIG. 2 is a schematic cross-sectional view which shows one configuration example of a write-once type optical recording medium in accordance with a second embodiment of the present invention. The write-once type optical recording medium 10 has a configuration that a substrate 1 is laminated by an inorganic recording film 6, a dielectric film 4, and a light transmission layer 5 in order. The inorganic recording film 6 has a configuration that a substrate 1 is laminated by a metal film 2 and an oxide film 3 in order. Parts other than the oxide film 3 are similar to the above-mentioned first embodiment, so that the description of parts other than oxide film 3 is omitted.

The oxide film 3 includes a first oxide film 3a and a second oxide film 3b, wherein the first oxide film 3a is provided at the side next to the metal film 2, and the second oxide film 3b is provided at the side next to the dielectric film 4. The first oxide film 3a and the second oxide film 3b are made of Ge oxide, and each oxygen composition of the first oxide film 3a and the second oxide film 3b are different. In other words, each absorption coefficient of the first oxide film 3a and the second oxide film 3b are different. Such configuration of the oxide film 3 expands power margin to provide the write-once type optical recording medium 10 having excellent recording characteristic.

In this regard, when the absorption coefficient of the first oxide film 3a and the second oxide film 3b is $k_1$ and $k_2$ respectively, it is proffered that these absorption coefficient $k_1$, $k_2$ satisfy $0.15 \leq k_1, k_2 \leq 0.90$, more preferably $0.20 \leq k_1, k_2 \leq 0.70$, and further, $0.25 \leq k_1, k_2 \leq 0.60$. By satisfying the relation of $0.15 \leq k_1, k_2 \leq 0.90$, for example, good modulation level and C/N ratio can be acquired. By satisfying the relation of $0.20 \leq k_1, k_2 \leq 0.70$, for example, better modulation level and C/N ratio can be acquired. By satisfying the relation of $0.25 \leq k_1, k_2 \leq 0.60$, for example, much better modulation level and C/N ratio can be acquired.

Furthermore, it is preferable that the absorption coefficient $k_1$, $k_2$ satisfy $k_1 > k_2$. By satisfying this relation, power margin can be expanded and the write-once type optical recording medium 10 with excellent recording characteristic is implemented.

Described below is one example of the forming process of the first oxide film 3a and the second oxide film 3b.

(The forming process of the first oxide film)

For example, the substrate 1 provided the metal film 2 is delivered to a vacuum chamber in which a target made of such as Ge oxide is provided, and then the inside of the vacuum chamber is vacuumed till a predetermined pressure is gained. After that, while such as Ar gas is induced to the vacuum chamber, the target is spattered to form the first oxide film 3a made of such as Ge oxide over the metal film 2.

The following is an example of the film forming condition under this forming process:

Ultimate vacuum: $5.0 \times 10^{-5}$ Pa
Atmosphere: 0.1 to 0.6 Pa
Input power: 1 to 3 kW (RF)
Gas type: Ar gas
Ar gas flow rate: 10 to 80 sccm

(The forming process of the second oxide film)

Second, for example, the substrate 1 is delivered to a vacuum chamber in which a target made of such as Ge oxide is provided, and then the inside of the vacuum chamber is vacuumed till a predetermined pressure is gained. After that, while such as Ar gas is induced to the vacuum chamber, the target is spattered to form the second oxide film 3b made of such as Ge oxide over the first oxide film 3a.

The following is an example of the film forming condition under this forming process:

Ultimate vacuum: $5.0 \times 10^{-5}$ Pa
Atmosphere: 0.1 to 0.6 Pa
Input power: 1 to 3 kW (RF)
Gas type: Ar gas
Ar gas flow rate: 10 to 80 sccm

As described above, in the second embodiment, since the first oxide film 3a made of Ge oxide and the second oxide film 3b made of Ge oxide of which composition ratio of oxygen is different from the first oxide film 3a form the oxide film 3, each absorption coefficient of the first oxide film 3a and the second oxide film 3b can be different. This enables the expansion of power margin.

(3) Third embodiment

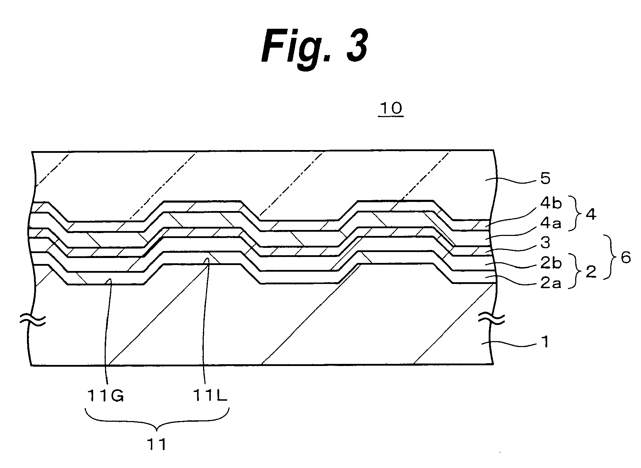

FIG. 3 is a schematic cross-sectional view which shows one configuration example of a write-once type optical recording medium in accordance with a third embodiment of the present invention. The write-once type optical recording medium 10 has a configuration that a substrate 1 is laminated by an inorganic recording film 6, a dielectric film 4, and a light transmission layer 5 in order. The inorganic recording film 6 has a configuration that a substrate 1 is laminated by a metal film 2 and an oxide film 3 in order. Parts other than the metal film 2 are similar to the above-mentioned first embodiment, so that the description of parts other than metal film 2 is omitted.

The metal film 2 includes the first metal film 2a and the second metal film 2b, wherein the first metal film 2a is provided at the side of the substrate 1, and the second metal film 2b is provided at the side of the oxide film 3.

The first metal film 2a is made of such as Ti and Si. The second metal film 2b is made of such as Ti. Also, for the purpose of improving optical characteristic, durability, recording sensitivity and so on, additive can further be added to the first metal film 2a and/or the second metal film 2b. For such additive, for example, the similar one in the above-mentioned first embodiment can be used. Moreover, the material forming the first metal film 2a and/or the second metal film 2b may be oxidized. By oxidizing, jitter can be improved. In addition, the material forming the first metal film 2a and/or the second metal film 2b may be nitrided. By nitriding, power margin can be expanded.

It is preferable that the film thickness of the first metal film 2a is within the range of 2 nm or more and 10 nm or less. If the film thickness is less than 2 nm, the effect gained by providing the first metal film 2a is decreased, so that the power margin will be almost same as the case that the metal film 2 is configured by single layer of the second metal film 2b.

In addition, it is preferable that the composition of Si of the first metal film 2a is within the range of 8 atom% or more and 32 atom% or less. The reason of this is that if it is less than 8 atom%, good jitter value cannot be gained, and if it is more than 32 atom%, good recording sensitivity cannot be gained.

Described below is one example of the forming process of the first metal film 2a and the second metal film 2b.

(The forming process of the first metal film)

For example the substrate 1 is delivered to a vacuum chamber in which a target made of TiSi is provided, and then the inside of the vacuum chamber is vacuumed till a predetermined pressure is gained. After that, while such as Ar gas is induced to the vacuum chamber, the target is spattered to form the first metal film 2a made of such as TiSi over the substrate 1.
The following is an example of the film forming condition under this forming process:

Ultimate vacuum: 5.0 x 10$^{-5}$ Pa
Atmosphere: 0.1 to 0.6 Pa
Input power: 1 to 3 kW (DC)
Gas type: Ar gas
Gas flow rate: 10 to 40 sccm

(The forming process of the second metal film)

Next, for example the substrate 1 is delivered to a vacuum chamber in which a target made of Ti is provided, and then the inside of the vacuum chamber is vacuumed till a predetermined pressure is gained. After that, while such as Ar gas is induced to the vacuum chamber, the target is spattered to form the second metal film 2b made of such as Ti over the substrate 1.
The following is an example of the film forming condition under this forming process:

Ultimate vacuum: 5.0 x 10$^{-5}$ Pa
Atmosphere: 0.1 to 0.6 Pa
Input power: 1 to 3 kW (DC)
Gas type: Ar gas
Gas flow rate: 10 to 40 sccm

As described above, in the third embodiment, since the first metal film 2a made of TiSi and the second metal film 2b made of Ti form the metal film 2, and the second metal film 2b is provided at the oxide film 3 side, power margin can be expanded.

(4) Fourth embodiment

Since the write-once type optical recording medium 10 according to the fourth embodiment is similar to the above-mentioned third embodiment other than the first metal film 2a and the second metal film 2b, the description of parts other than the first metal film 2a and the second metal film 2b is omitted.
The metal film 2 includes the first metal film 2a made of Al and the second metal film 2b made of TiSi, the second metal film 2b is provided so as to be next to the oxide film. It is preferable that the film thickness of the first metal film 2a is 7 nm or less. Furthermore, the first metal film 2a and/or the second metal film 2b may further include additive, and for the additive, for example, the similar one in the above-mentioned first embodiment can be used. Moreover, the first metal film 2a and/or the second metal film 2b may be nitrided and/or oxidized.
Described below is one example of the forming process of the first metal film 2a and the second metal film 2b.

(The forming process of the first metal film)

For example the substrate 1 is delivered to a vacuum chamber in which a target made of Al is provided, and then the inside of the vacuum chamber is vacuumed till a predetermined pressure is gained. After that, while process gas is induced to the vacuum chamber, the target is spattered to form the first metal film 2a over the substrate 1.
The following is an example of the film forming condition under this forming process:

Ultimate vacuum: 5.0 x 10$^{-5}$ Pa
Atmosphere: 0.1 to 0.6 Pa
Input power: 1 to 3 kW (DC)
Gas type: Ar gas
Gas flow rate: 10 to 40 sccm

(The forming process of the second metal film)

Next, for example the substrate 1 is delivered to a vacuum chamber in which a target made of TiSi is provided, and then the inside of the vacuum chamber is vacuumed till a predetermined pressure is gained. After that, while process gas is induced to the vacuum chamber, the target is spattered to form the second metal film 2b over the substrate 1.
The following is an example of the film forming condition under this forming process:

Ultimate vacuum: $5.0 \times 10^{-5}$ Pa
Atmosphere: 0.1 to 0.6 Pa
Input power: 1 to 3 kW (DC)
Gas type: Ar gas
Gas flow rate: 10 to 40 sccm

As described above, in the fourth embodiment, since the first metal film made of Al and the second metal film 2b made of TiSi form the metal film 2, and the second metal film 2b is provided at the oxide film 3 side, recording sensitivity can be enhanced.

(5) Fifth embodiment

Since the write-once type optical recording medium 10 according to the fifth embodiment is similar to the above-mentioned third embodiment other than the first metal film 2a and the second metal film 2b, the description of parts other than the first metal film 2a and the second metal film 2b is omitted.
The first metal film 2a and the second metal film 2b are made of TiSi. When the composition of the first metal film 2a and the second metal film 2b are $TiSi_x$, $TiSi_y$ respectively, it is preferable that $TiSi_x$ and $TiSi_y$ satisfy $x < y$.
Furthermore, the first metal film 2a and/or the second metal film 2b may further include additive, for the additive, for example, the similar one in the above-mentioned first embodiment can be used. In addition, the first metal film 2a and/or the second metal film 2b may be nitrided and/or oxidized.
Described below is one example of the forming process of the first metal film 2a and the second metal film 2b.

(The forming process of the first metal film)

For example the substrate 1 is delivered to a vacuum chamber in which a target made of TiSi is provided, and then the inside of the vacuum chamber is vacuumed till a predetermined pressure is gained. After that, while process gas is induced to the vacuum chamber, the target is spattered to form the first metal film 2a over the substrate 1.

Ultimate vacuum: $5.0 \times 10^{-5}$ Pa
Atmosphere: 0.1 to 0.6 Pa
Input power: 1 to 3 kW (DC)
Gas type: Ar gas
Gas flow rate: 10 to 40 sccm

(The forming process of the second metal film)

Next, for example the substrate 1 is delivered to a vacuum chamber in which a target made of TiSi is provided, and then the inside of the vacuum chamber is vacuumed till a predetermined pressure is gained. After that, while process gas is induced to the vacuum chamber, the target is spattered to form the second metal film 2b over the substrate 1. In the forming process of the second metal film 2b, a target having different composition from that used in the forming process of the first metal film 2a is used. In addition, the target used in the forming process of the second metal film 2b has higher Si content than that used in forming process of the first metal film 2a. For example, when the target composition of the first metal film 2a and the second metal film 2b are TiSix, TiSiy respectively, TiSix and TiSiy satisfy $x < y$.
The following is an example of the film forming condition under this forming process:

Ultimate vacuum: $5.0 \times 10^{-5}$ Pa
Atmosphere: 0.1 to 0.6 Pa
Input power: 1 to 3 kW (DC)
Gas type: Ar gas
Gas flow rate: 10 to 40 sccm

As described above, in the fifth embodiment, since the first metal film 2a made of TiSi and the second metal film 2b made of TiSi which has different composition from the first metal film 2b form the metal film 2, and the Si content of the first metal film 2a is adjusted to be less comparing to that of the second metal film, the recording sensitivity can be improved. This ensures wide margin at the high power side, so that OPC (Optimum Power Control, the optimization range of the recording range by drive) is expanded. Moreover, the support for high line speed recording and high capacity multi-layer medium with two layers or more is facilitated.

[Example]

Next, the present invention will be more specifically described with examples. However, it should be noted that the present invention is not limited to these examples.

Comparative example 1

Comparative example 1 describes a case that SiN having durability problem is used for the second dielectric film (protective film).
First, by the injection molding method, a substrate provided an in-groove and an on-groove on a main surface was formed. The substrate had a thickness of 1.1 mm, a track pitch of 0.32 $\mu$m, a groove depth of 20 nm, and was for BD.
Next, by the spattering method, a metal film, an oxide film, a first dielectric film, and a second dielectric film were laminated over the substrate in order. For lamination, Unaxis Sprinter (registered trademark) was used.
The following is the material and film thickness of each film:

Metal film
Material: $Ti_{75}Si_{25}$, film thickness: 22 nm
Oxide film
Material: $Ge_{50}O_{50}$, film thickness: 25 nm
First dielectric film
Material: $ZnS-SiO_2$, film thickness: 55 nm
Second dielectric film
Material: $Si_3N_4$, film thickness: 4 nm

The following is the film forming condition of each film:

Metal film
Gas type: Ar, N, Gas flow rate: 30 sccm (Ar), 5 sccm (N), Input power: 3 kW (DC)
Oxide film
Gas type: Ar, Gas flow rate: 30 sccm, Input power: 2kW (RF)
First dielectric film
Gas type: Ar, Gas flow rate: 6 sccm, Input power: 4.5kW (RF)
Second dielectric film
Gas type: Ar, N, Gas flow rate: 50 sccm, 37 sccm, Input power: 4kW (DC)

Next, an annular polycarbonate sheet was adhered to a substrate 1 with pressure sensitivity additive (PSA) which had been applied to the main surface of the sheet in advance to form a light transmission layer having a thickness of 0.1 mm. The light transmission layer complied with BD standard, and the light transmission layer side was an irradiated surface of record and reproduce light. An aimed write-once type optical recording medium was accomplished by these processes.
Next, for the write-once type optical recording medium obtained as described above, (a) SER (Symbol Error Rate) just after recording, (b) SER after accelerated test in the normal temperature tank, (c) Durability judgment, (d) Bottom jitter, and (e) Power margin were evaluated.

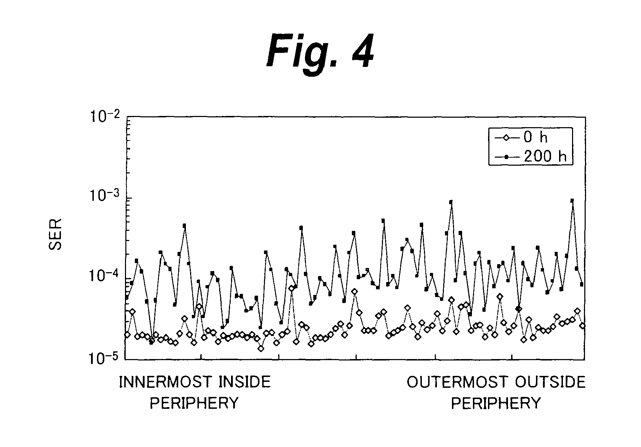

(a) SER just after recording,
By the use of optical disc tester for BD (Pulstec Industrial, Co., Ltd, ODU-1000), BD 25 GB, 2x, recorded and reproduced information signals on the write-once type optical recording medium, and SER were measured. As a result, SER just after recording was very good and was around $2 \times 10^{-5}$.
(b) SER after accelerated test in the normal temperature tank
The write-once type optical recording medium was held in a normal temperature tank with a temperature of 80°C, a humidity of 85% for 200 h and an accelerated test was carried out, then the temperature was returned to the room temperature, and then the same area where had been measured in the case of (a) SER just after recording was reproduced to measure SER. As a result, as shown in FIG. 4, some areas having deteriorated error were generated.

(c) Durability judgment

The areas having deteriorated error was analyzed with SEM (Scanning Electron Microscope), etc., it was found that there were some parts in which Ge aggregated, which caused deteriorated error areas. This is a phenomena caused in the case that water immerged in the oxide film made of GeO, and the cause was found that the second dielectric film had not functioned as a sufficient protective film after recording.

(d) Bottom jitter

Through a Limit Equalizer (Pulstec), jitter was measured with a Time Interval Analyzer (Yokogawa Electric Corporation, TA720), and the lowest jitter value was the bottom jitter.

(e) Power margin

Through a Limit Equalizer (Pulstec), jitter was measured with a Time Interval Analyzer (Yokogawa Electric Corporation, TA720), and the value calculated by dividing a power range which the measured jitter value was 8.5% or less by a power with the minimum jitter was the power margin.

Example 1

Next, by carrying out other conditions than a condition in which $(SiO_2)_{15}(Cr_2O_3)_{70}(ZrO_2)_{15}$ as the second dielectric film similar to Comparative example 1, a write-once type optical recording medium was obtained. And then, similarly to Comparative example 1, (a) to (e) were evaluated.

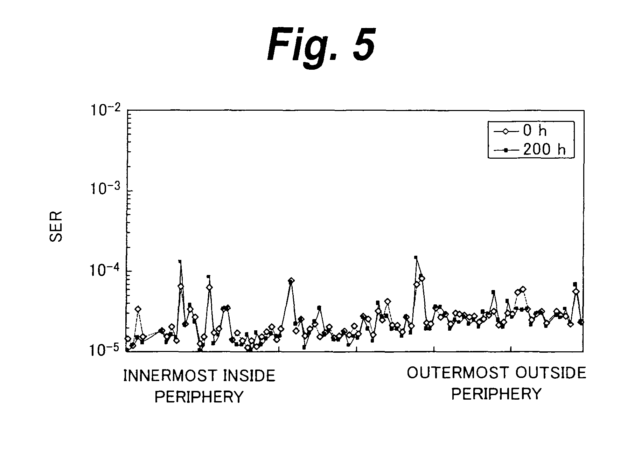

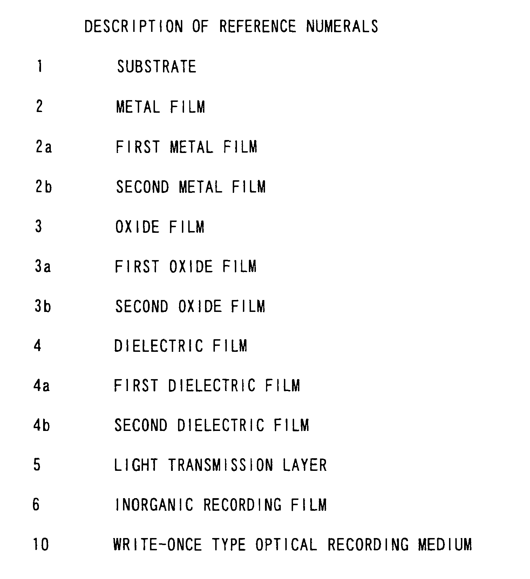

Initial recording characteristic was almost same or better than that of Comparative example 1. In other words, reflectivity, recording sensitivity, and bottom jitter were almost same as those in Comparative example 1, Example 1 had a little bit better recording power margin than Comparative example 1, and recording characteristic was also improved. Furthermore, according to the result of an accelerated test, as shown in FIG. 5, the degrading of SER was almost completely improved.

As just described, as the material of the second dielectric film, in the view of initial recording characteristic, both $Si_3N_4$ and $(SiO_2)_{15}(Cr_2O_3)_{70}(ZrO_2)_{15}$ were good, but in the view of durability, $(SiO_2)_{15}(Cr_2O_3)_{70}(ZrO_2)_{15}$ had a better result. It is because the internal stress of the second dielectric film probably effects. In other words, SiN film is a material having high internal stress and which is easy to get cracks, and having good adhesiveness against ZnS-SiO$_2$ film, so that even the thickness was just 4 nm, ZnS-SiO$_2$ film caused a crack at the same time when SiN film caused a crack, which probably resulted in durability degrade.

Examples 2 to 8

As shown in Table 1, other conditions than a condition that $SiO_2$-$Cr_2O_3$-$ZrO_2$ was used for the second dielectric film, and a condition that the composition of $Cr_2O_3$ was adjusted to be within the range of 40 atom% or more and 90 atom% or less were carried out similarly to Comparative example 1 to obtain a write-once type optical recording medium. And then, similarly to Comparative example 1, (a) to (e) were evaluated.

Comparative examples 2 to 5

As shown in Table 1, other conditions than a condition that $SiO_2$-$Cr_2O_3$-$ZrO_2$ was used for the second dielectric film, and a condition that the composition of $Cr_2O_3$ was adjusted to be out of the range of 40 atom% or more and 90 atom% or less were carried out similarly to Comparative example 1 to obtain a write-once type optical recording medium. And then, similarly to Comparative example 1, (a) to (e) were evaluated.

Comparative examples 6 to 9

Other conditions than a condition that a material shown in Table 1 was used for the second dielectric film were carried out similarly to Comparative example 1 to obtain a write-once type optical recording medium. And then, similarly to Comparative example 1, (a) to (e) were evaluated.

Comparative example 10

As shown in Table 1, other conditions than a condition that forming the second dielectric film was omitted were carried out similarly to Comparative example 1 to obtain a write-once type optical recording medium. And then, similarly to Comparative example 1, (a) to (e) were evaluated.

Table 1 shows the evaluation results of (a) SER just after recording, (b) SER after accelerated test in the normal temperature tank, (c) Durability judgment, (d) Bottom jitter, and (e) Power margin measured in Examples 1 to 8 and Comparative examples 1 to 10. In this regards, SER is the average value of all data when symbol error rates from inside periphery to outside periphery are measured.

The comprehensive judgment is shown by two grades: "O" is good and "X" is below practical use criteria.

The following is the criteria of judgment.

O: There is no SER rise or Ge aggregation, and good jitter and power margin.

X: There is either SER rise or Ge aggregation, and the degrading of jitter or power margin.

(Table 1)

| | Material of the second dielectric film | SER just after recording | SER after accelerated test | Ge aggregation | Jitter | Power margin | Comprehensive judgment |
|---|---|---|---|---|---|---|---|
| Example 1 | $(SiO_2)_{15}$ $(Cr_2O_3)_{70}$ $(ZrO_2)_{15}$ | $4\times10^{-5}$ | $4\times10^{-5}$ | No | 5.4% | 40% | O |
| Example 2 | $(SiO_2)_{10}$ $(Cr_2O_3)_{70}$ $(ZrO_2)_{20}$ | $5\times10^{-5}$ | $5\times10^{-5}$ | No | 5.7% | 36% | O |
| Example 3 | $(SiO_2)_{35}$ $(Cr_2O_3)_{50}$ $(ZrO_2)_{15}$ | $3\times10^{-5}$ | $3\times10^{-5}$ | No | 5.6% | 36% | O |
| Example 4 | $(SiO_2)_{25}$ $(CrO_3)_{50}$ $(ZrO_2)_{25}$ | $4\times10^{-5}$ | $4\times10^{-5}$ | No | 5.3% | 38% | O |
| Example 5 | $(SiO_2)_{15}$ $(Cr_2O_3)_{50}$ $(ZrO_2)_{35}$ | $4\times10^{-5}$ | $5\times10^{-5}$ | No | 5.4% | 39% | O |
| Example 6 | $(Cr_2O_3)_{90}$ $(ZrO_2)_{10}$ | $4\times10^{-5}$ | $8\times10^{-5}$ | No | 6.0% | 29% | O |
| Example 7 | $(Cr_2O_3)_{50}$ $(ZrO_2)_{50}$ | $4\times10^{-5}$ | $4\times10^{-5}$ | No | 5.8% | 32% | O |
| Example 8 | $(Cr_2O_3)_{40}$ $(ZrO_2)_{60}$ | $4\times10^{-5}$ | $6\times10^{-5}$ | No | 5.9% | 30% | O |
| Comparative example 1 | $Si_3N_4$ | $2\times10^{-5}$ | $1\times10^{-4}$ | Yes | 5.5% | 32% | X |
| Comparative example 2 | $(SiO_2)_{35}$ $(Cr_2O_3)_{30}$ $(ZrO_2)_{35}$ | $3\times10^{-5}$ | $4\times10^{-5}$ | Yes | 5.5% | 38% | X |
| Comparative example 3 | $(SiO_2)_{50}$ $(Cr_2O_3)_{30}$ $(ZrO_2)_{20}$ | $4\times10^{-5}$ | $5\times10^{-5}$ | Yes | 5.6% | 36% | X |
| Comparative example 4 | $(SiO_2)_{20}$ $(Cr_2O_3)_{30}$ $(ZrO_2)_{50}$ | $3\times10^{-5}$ | $3\times10^{-5}$ | Yes | 5.7% | 37% | X |
| Comparative example 5 | $Cr_2O_3$ | $7\times10^{-5}$ | $4\times10^{-4}$ | Yes | 6.2% | 25% | X |
| Comparative example 6 | $(ZnO)_{50}$ $(Al_2O_3)_{50}$ | $8\times10^{-5}$ | $9\times10^{-5}$ | Yes | 5.4% | 29% | X |

(continued)

|  | Material of the second dielectric film | SER just after recording | SER after accelerated test | Ge aggregation | Jitter | Power margin | Comprehensive judgment |
|---|---|---|---|---|---|---|---|
| Comparative example 7 | $Ta_2O_5$ | $4x10^{-5}$ | $5x1.0^{-5}$ | Yes | 5.3% | 35% | X |
| Comparative example 8 | $SiO_2$ | $7x10^{-5}$ | $7x10^{-4}$ | Yes | 5.9% | 29% | X |
| Comparative example 9 | $Nb_2O_5$ | $7x10^{-5}$ | $1x10^{-4}$ | Yes | 5.7% | 25% | X |
| Comparative example 10 | None | $3x10^{-5}$ | $1x10^{-4}$ | No | 8.5% | 30% | X |

Table 1 shows the following:

Although the film thickness of the second dielectric film is just 4 nm and the film does not directly contact the metal film and the oxide film, recording characteristic (jitter and power margin) was affected, and durability was significantly affected by the material. This probably is because of mechanical characteristic such as the hardness of the second dielectric film was concerned in the result. Since the film thickness of the recording film significantly varies after recording, especially recording characteristic at high power side was affected.

In addition, the second dielectric film including $Cr_2O_3$ and $ZrO_2$ shows good characteristic, and especially the improvement effect of durability was good when the composition of $Cr_2O_3$ was 40 atom% or more and 90 atom% or less. This is an inherit character of the case in which such recording film having large cubical expansion is used, and is showing a range which a good characteristic is obtained as the protective film.

While embodiments and examples of the present invention have been specifically described, the present invention is not limited to the above-mentioned embodiments and examples, but various modifications are possible within the spirit and scope of the appended claims of the present invention.

For example, numeric values described in the above-mentioned embodiments and examples are mere examples, thus different value may be used if necessary.

Furthermore, each configuration in the above-mentioned embodiments and examples can be combined with each other without departing from the scope of the present invention.

Moreover, in the above-mentioned embodiments and examples, the case of the application of the present invention to the write-once type optical recording medium 10 having the inorganic recording film 6 made of inorganic material was described, but the application to a write-once type optical recording medium having a recording film made of organic dye is also possible.

In addition, in the above-mentioned embodiments and examples, the case of the configuration in which the oxide film 3 is formed by the single layer or double layer oxide film, but the oxide film 3 may be formed by multiple layers of 3 or more layers.

Moreover, in the above-mentioned embodiments and examples, the case of the configuration in which the metal film 2 is formed by the single layer or double layer oxide film, but the metal film 2 may be formed by multiple layers of 3 or more layers.

Furthermore, in the above-mentioned embodiments and examples, the case of the configuration in which the metal film 2 is made of Ti, but it is considerable that the use of the metal film 2 made of other metal material realizing photocatalyst effect than Ti can also accomplish a write-once type optical recording medium capable of recording information signals similarly to the above-mentioned embodiments and

examples.

**Claims**

1.  An information recording medium comprising:

a substrate;
a recording film provided on the substrate; and
a dielectric film provided on the substrate,
wherein said recording film is made of recording material configured to cause cubical expansion by light energy irradiation, and said dielectric film is made of $ZrO_2$ and $Cr_2O_3$.

2. The information recording medium according to claim 1, said dielectric film contains 40 atom% or more and 90 atom% or less $Cr_2O_3$.

3. The information recording medium according to claim 1, wherein said dielectric film further includes $SiO_2$.

4. The information recording medium according to claim 1, wherein said recording film includes an oxide film made of germanium (Ge) oxide.

5. The information recording medium according to claim 4, wherein said recording film further includes an adjacency film which adjacent to said oxide film, and the adjacency film is made of titanium (Ti).

6. The information recording medium according to claim 4, wherein said recording film further includes an adjacency film which adjacent to said oxide film, and the adjacency film is made of TiSi.

7. The information recording medium according to claim 1, wherein said dielectric film have a film thickness of 2 nm or more and 20 nm or less.

8. The information recording medium according to claim 1, wherein a dielectric film made of $ZnS$-$SiO_2$ is provided between said recording film and said dielectric film made of $ZrO_2$ and $Cr_2O_3$.

9. A method for manufacturing an information recording medium which has a substrate, a recording film provided on the substrate, and a dielectric film provided on the substrate, comprising the steps of:

   forming said recording film from a recording material configured to cause cubical expansion by light energy irradiation; and
   forming said dielectric film made of $ZrO_2$ and $Cr_2O_3$.

# Fig. 1

10

5
4b
4a      } 4
3
2       } 6

11G      11L

11

1

# Fig. 2

# Fig. 3

<u>10</u>

# Fig. 4

# Fig. 5

DESCRIPTION OF REFERENCE NUMERALS

1　　　　SUBSTRATE

2　　　　METAL FILM

2a　　　FIRST METAL FILM

2b　　　SECOND METAL FILM

3　　　　OXIDE FILM

3a　　　FIRST OXIDE FILM

3b　　　SECOND OXIDE FILM

4　　　　DIELECTRIC FILM

4a　　　FIRST DIELECTRIC FILM

4b　　　SECOND DIELECTRIC FILM

5　　　　LIGHT TRANSMISSION LAYER

6　　　　INORGANIC RECORDING FILM

10　　　WRITE-ONCE TYPE OPTICAL RECORDING MEDIUM

<table>
<tr><td colspan="2" align="center"><b>INTERNATIONAL SEARCH REPORT</b></td><td colspan="2">International application No.<br>PCT/JP2007/050632</td></tr>
</table>

A. CLASSIFICATION OF SUBJECT MATTER
*G11B7/254*(2006.01)i, *G11B7/24*(2006.01)i, *G11B7/243*(2006.01)i, *G11B7/257* (2006.01)i

According to International Patent Classification (IPC) or to both national classification and IPC

B. FIELDS SEARCHED

Minimum documentation searched (classification system followed by classification symbols)
G11B7/254, G11B7/24, G11B7/243, G11B7/257

Documentation searched other than minimum documentation to the extent that such documents are included in the fields searched
Jitsuyo Shinan Koho          1922–1996   Jitsuyo Shinan Toroku Koho   1996–2007
Kokai Jitsuyo Shinan Koho    1971–2007   Toroku Jitsuyo Shinan Koho   1994–2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-30864 A  (Ricoh Co., Ltd.), 29 January, 2004 (29.01.04), Par. Nos. [0030] to [0035] (Family: none) | 1-7,9 |
| Y | JP 2005-56545 A  (Matsushita Electric Industrial Co., Ltd.), 03 March, 2005 (03.03.05), Par. Nos. [0007] to [0009] & US 2005/0019695 A1    & EP 1501090 A1 | 1-3,7,9 |
| Y | JP 2005-149588 A  (Matsushita Electric Industrial Co., Ltd.), 09 June, 2005 (09.06.05), Par. No. [0029] (Family: none) | 1-3,7,9 |

☒ Further documents are listed in the continuation of Box C.          ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 April, 2007 (17.04.07) | Date of mailing of the international search report<br>24 April, 2007 (24.04.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/050632

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-293821 A  (Matsushita Electric Industrial Co., Ltd.), 20 October, 2005 (20.10.05), Par. No. [0312] & US 2005/0202204 A1    & EP 1575043 A2 | 1-3,7,9 |
| Y | JP 64-17234 A  (Fuji Photo Film Co., Ltd.), 20 January, 1989 (20.01.89), Claims (Family: none) | 4 |
| Y | JP 2005-108338 A  (Ricoh Co., Ltd.), 21 April, 2005 (21.04.05), Par. No. [0037] (Family: none) | 5-6 |
| A | JP 5-169819 A  (Hitachi Maxell, Ltd.), 09 July, 1993 (09.07.93), Full text; all drawings & JP 05-012710 A        & EP 0474311 A1 | 1-9 |
| A | JP 2005-209252 A  (Renesas Technology Corp.), 04 August, 2005 (04.08.05), Full text; all drawings (Family: none) | 1-9 |

**EP 1 981 028 A1**

## REFERENCES CITED IN THE DESCRIPTION

### Patent documents cited in the description

- JP 2003059106 A